# EUROPEAN PATENT SPECIFICATION

(11) **EP 4 385 801 B1**
(45) Date of publication and mention of the grant of the patent: **11.02.2026**
(21) Application number: 22855525.6
(22) Date of filing: 12.08.2022
(51) Int. Cl.: B60L 53/00, B60L 53/62, H02J 7/00, B60L 55/00, B60L 58/14, B60L 58/15

(54) **DISCHARGE CONTROL METHOD AND APPARATUS, ELECTRONIC DEVICE, AND STORAGE MEDIUM**
ENTLADUNGSSTEUERUNGSVERFAHREN UND -VORRICHTUNG, ELEKTRONISCHE VORRICHTUNG UND SPEICHERMEDIUM
PROCÉDÉ ET APPAREIL DE COMMANDE DE DÉCHARGE, DISPOSITIF ÉLECTRONIQUE ET SUPPORT DE STOCKAGE

(30) Priority: 12.08.2021 CN 202110924126
(43) Date of publication of application: 19.06.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/112058
(87) International publication number: WO 2023/016545

(56) References cited:
- EP-A1- 3 744 553
- CN-A- 108 099 645
- CN-A- 108 400 642
- CN-A- 111 993 943
- CN-A- 112 009 303
- CN-A- 113 193 624
- CN-A- 113 525 109
- US-A1- 2019 165 591
- US-A1- 2021 008 996
- US-A1- 2021 203 016
- MAHURE PALLAVI ET AL: "Bidirectional Conductive Charging of Electric Vehicles for V2V Energy Exchange", IECON 2020 THE 46TH ANNUAL CONFERENCE OF THE IEEE INDUSTRIAL ELECTRONICS SOCIETY, IEEE, 18 October 2020 (2020-10-18), pages 2011 - 2016, XP033858339, DOI: 10.1109/IECON43393.2020.9255386

## Description

### RELATED APPLICATION

The present disclosure claims the priority of Chinese patent with an application number of 202110924126.8, an invention title of 'discharge control method and apparatus, electronic device and storage medium', and filed on August 12, 2021.

### TECHNICAL FIELD

The present disclosure relates to the technical field of automobiles, and particularly to a discharge control method and apparatus, an electronic device and a storage medium.

### BACKGROUND

With the development of the concept of energy saving and environmental protection, the proportion of electric automobiles in the automotive market is increasing, and users also have higher and higher requirements for the convenience of the electric automobiles. If electric automobiles could fully leverage their mobile energy storage capabilities by providing discharge services to other electric vehicles or electrical devices besides EVs during idle periods, it would significantly enhance the practicality of electric automobiles and strongly promote their rapid development. Thus, the emergence of automobile-to-load discharge technology has occurred. Therefore, an automobile-to-load discharge technology has emerged. However, how to improve the discharge efficiency during an automobile-to-load discharge is a problem urgently to be solved.

Discharge control method and apparatus are known in the prior art, e.g. from CN111993943A, EP3744553A1, US 2019/165591 A1 and "Bidirectional Conductive Charging of Electric Vehicles for V2V Energy Exchange", IECON 2020 THE 46TH ANNUAL CONFERENCE OF THE IEEE INDUSTRIAL ELECTRONICS SOCIETY, IEEE,18 October 2020 (2020-10-18), pages 2011-2016, XP033858339,DOI: 10.1109/IECON43393.2020.9255386.

### SUMMARY

The embodiments of the present disclosure provide a discharge control method and apparatus, an electronic device and a storage medium, so as to improve the discharge efficiency during an automobile-to-load discharge.

In a first aspect, an embodiment of the present disclosure provides a discharge control method according to claim 1 applied to an electric automobile, including:
acquiring a voltage signal output by a discharge apparatus which has been connected to a load, and acquiring battery capacity information of a bidirectional charger connected to the discharge apparatus;
determining a load type corresponding to the acquired voltage signal according to a pre-established corresponding relationship between the voltage signal and the load type; and
controlling the bidirectional charger to discharge electricity to the load according to a preset discharge strategy corresponding to the determined load type and the battery capacity information.

In a second aspect, an embodiment of the present disclosure provides a discharge control apparatus according to claim 7 applied to an electric automobile, including:
an acquisition unit configured to acquire a voltage signal output by a discharge apparatus which has been connected to a load, and acquire battery capacity information of a bidirectional charger connected to the discharge apparatus;
a determining unit configured to determine a load type corresponding to the acquired voltage signal according to a pre-established corresponding relationship between the voltage signal and the load type; and
a control unit configured to control the bidirectional charger to discharge electricity to the load according to a preset discharge strategy corresponding to the determined load type and the battery capacity information.

In a third aspect, an embodiment of the present disclosure provides an electronic device, including: at least one processor, and a memory communicatively connected thereto, in which:
the memory stores an instruction executable by the at least one processor, and when executed by the at least one processor, the instruction enables the at least one processor to perform the aforementioned method.

In a fourth aspect, an embodiment of the present disclosure provides a storage medium, in which when an instruction in the storage medium is executed by a processor of an electronic device, the electronic device can perform the aforementioned method.

In the embodiments of the present disclosure, a voltage signal output by a discharge apparatus which has been connected to a load is acquired, and battery capacity information of a bidirectional charger connected to the discharge apparatus is acquired; a load type corresponding to the acquired voltage signal is determined according to a pre-established corresponding relationship between the voltage signal and the load type; and the bidirectional charger is controlled to discharge electricity to the load according to a preset discharge strategy corresponding to the determined load type and the battery capacity information. In this way, the loads are classified, thereby discharging electricity to different types of loads using different discharge strategies, instead of discharging electricity to all the loads using a single discharge control strategy, which is beneficial to making full use of the electric energy of the electric automobile and improving the discharge efficiency thereof.

### BRIEF DESCRIPTION OF THE DRAWINGS

The drawings described here are used to provide a further understanding of the present disclosure and constitute a part thereof. The illustrative embodiments of the present disclosure and the descriptions thereof are used to explain the present disclosure and do not constitute undue limitations thereto. In the drawings:
FIG. 1 illustrates an application scenario diagram of a discharge control method according to an embodiment of the present disclosure;
FIG. 2 illustrates a flowchart of a discharge control method according to an embodiment of the present disclosure;
FIG. 3 illustrates a flowchart of controlling a bidirectional charger to discharge a load of an electric automobile type according to an embodiment of the present disclosure;
FIG. 4 illustrates a flowchart of another discharge control method according to an embodiment of the present disclosure;
FIG. 5 illustrates a flowchart of still another discharge control method according to an embodiment of the present disclosure;
FIG. 6 illustrates a schematic diagram of a discharge control process according to an embodiment of the present disclosure;
FIG. 7 illustrates a schematic diagram of another discharge control process according to an embodiment of the present disclosure;
FIG. 8 illustrates a structural diagram of a discharge control apparatus according to an embodiment of the present disclosure; and
FIG. 9 illustrates a schematic diagram of a hardware structure of an electronic device which implements a discharge control method according to an embodiment of the present disclosure.

### DETAILED OF THE EMBODIMENTS

In order to improve the discharge efficiency during an automobile-to-load discharge, the embodiments of the present disclosure provide a discharge control method and apparatus, an electronic device and a storage medium.

The exemplary embodiments of the present disclosure will be described below with reference to the drawings. It should be understood that the exemplary embodiments described here are only used to illustrate and explain, rather than limiting, the present disclosure, and the embodiments of the present disclosure or the features in the embodiments can be combined with each other without conflict.

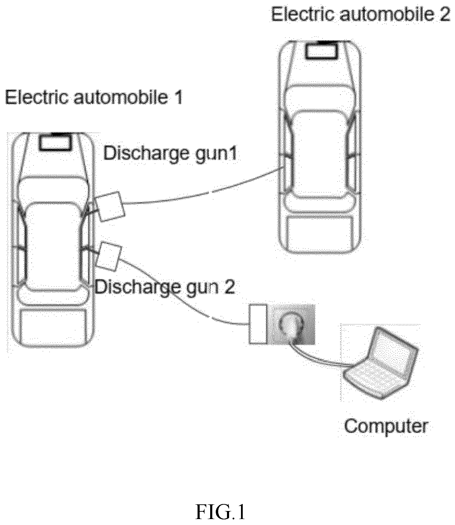

FIG. 1 illustrates an application scenario diagram of a discharge control method according to an embodiment of the present disclosure, including an electric automobile 1, an electric automobile 2, a computer, a discharge gun 1 (which may be understood as a discharge apparatus) and a discharge gun 2 (which may be understood as a discharge apparatus), in which the discharge gun 1 may be connected to the electric automobile 2, the discharge gun 2 may be connected to a socket, and a power line of the computer may be plugged into the socket. During implementation, when the discharge gun 1 is plugged into a discharge port of the electric automobile 1, the electric automobile 1 discharges the electric automobile 2; and when the discharge gun 2 is plugged into the discharge port of the electric automobile 1, the electric automobile 1 discharges the computer through the socket.

Generally, there are different discharge requirements for different loads. For example, an electric automobile requires high voltage and current, and an electric appliance such as a computer or a mobile phone requires a stable voltage. In order to enable the electric automobile to discharge efficiently, the load may be classified into a load of an electric automobile type and a load of an electric appliance type (i.e., a load other than the load of the electric automobile type), and then different discharge strategies may be adopted for different types of loads.

The embodiments of the present disclosure will be described in detail below with reference to the drawings.

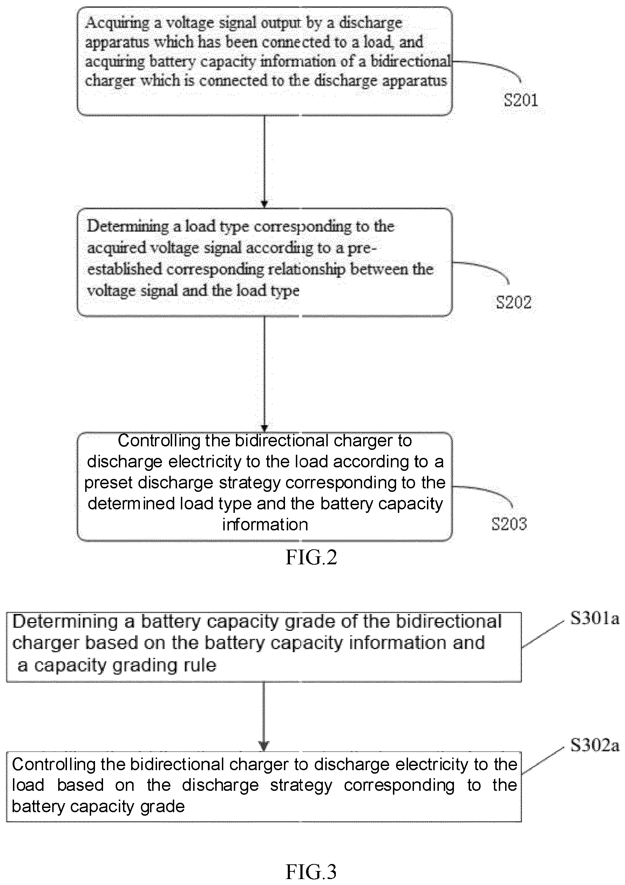

FIG. 2 illustrates a flowchart of a discharge control method according to an embodiment of the present disclosure, and the method includes the following steps.

Step S201: acquiring a voltage signal output by a discharge apparatus which has been connected to a load, and acquiring battery capacity information of a bidirectional charger which is connected to the discharge apparatus.

Step S202: determining a load type corresponding to the acquired voltage signal according to a pre-established corresponding relationship between the voltage signal and the load type.

During implementation, the electric automobile may be connected to one, two or more discharge apparatuses. For example, the electric automobile may be connected to two discharge apparatuses, one of which charges the load of the electric automobile type, and the other charges the load of the electric appliance type. However, the charging requirements for the two types of loads are different, so voltage signals output by the two discharge apparatuses which have been connected to the corresponding types of loads are also different. In order to automatically distinguish the load type, the corresponding relationship between the voltage signal and the load type can be established in advance, and when any load is subsequently charged, the load type of the load can be determined using the voltage signal output by the charging gun connected to the load and the corresponding relationship.

Step S203: controlling the bidirectional charger to discharge electricity to the load according to a preset discharge strategy corresponding to the determined load type and the battery capacity information.

Case 1: the determined load type is a specified type, such as the electric automobile type.

In this case, the bidirectional charger may be controlled to discharge electricity to the load according to a flow illustrated in FIG. 3, and the flow includes the following steps.

Step S301a: determining a battery capacity grade of the bidirectional charger based on the battery capacity information and a capacity grading rule.

During implementation, the battery capacity of the bidirectional charger is determined based on the battery capacity information. If the battery capacity of the bidirectional charger is between 100% and 80%, the battery capacity grade may be determined as a first grade (the battery capacity is sufficient); if the battery capacity of the bidirectional charger is between 80% and 50%, the battery capacity grade may be determined as a second grade (the battery capacity is moderate), and if the battery capacity of the bidirectional charger is between 50% and 30%, the battery capacity grade may be determined as a third grade (the battery capacity is slightly insufficient). However, when the battery capacity of the bidirectional charger is lower than a preset value, such as 30%, it means that the power of a first electric automobile itself is low (the battery capacity is insufficient) and the external discharge can be stopped.

As can be seen from the above example, battery capacities corresponding to the first grade, the second grade and the third grade are decreased in sequence.

Step S302a: controlling the bidirectional charger to discharge electricity to the load based on the discharge strategy corresponding to the battery capacity grade.

During implementation, a voltage and a current during discharge are determined based on the discharge strategy corresponding to the battery capacity grade. For example, when the battery capacity grade is the first grade, a maximum current at which bidirectional charger discharging at a specified voltage is determined, and then the specified voltage and the maximum current are respectively determined as the voltage and the current during discharge; when the battery capacity grade is the second grade, a maximum voltage at which bidirectional charger discharging at a specified current is determined, and then the maximum voltage and the specified current are respectively determined as the voltage and the current during discharge; when the battery capacity grade is the third grade, a maximum voltage and a maximum current that can be supplied by the bidirectional charger are determined, and then the maximum voltage and the maximum current are respectively determined as the voltage and the current during discharge. Next, based on the determined voltage and current during discharge, the bidirectional charger is controlled to discharge electricity to the load.

In this way, with the change of battery capacity, the current and the voltage output by the bidirectional charger are constantly adjusted, i.e., the output power of the bidirectional charger is adjusted, instead of always using the same output power for external discharge, which is beneficial to increasing the battery utilization efficiency to the utmost extent and maximizing the discharge efficiency.

Case 2: the determined load type is not a specified type.

In this case, the bidirectional charger may be controlled based on the battery capacity information to discharge electricity to the load with a set voltage and a current not higher than a set value, thereby not only charging the load, but also protecting the load from being burnt out by excessive current.

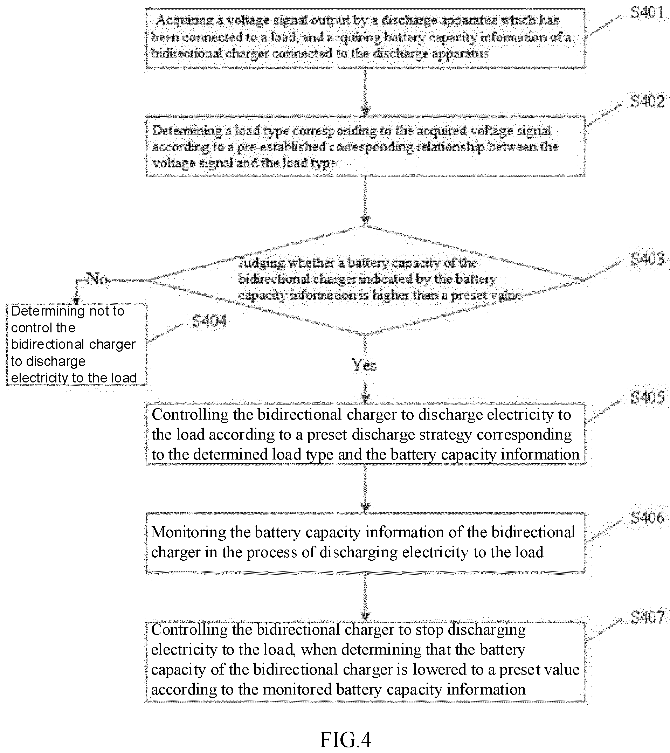

FIG. 4 illustrates a flowchart of another discharge control method according to an embodiment of the present disclosure, and the method includes the following steps.

Step S401: acquiring a voltage signal output by a discharge apparatus which has been connected to a load, and acquiring battery capacity information of a bidirectional charger connected to the discharge apparatus.

Step S402: determining a load type corresponding to the acquired voltage signal according to a pre-established corresponding relationship between the voltage signal and the load type.

Step S403: judging whether a battery capacity of the bidirectional charger indicated by the battery capacity information is higher than a preset value; if not, entering S404, and if yes, entering S405.

In which, the preset value may indicate a minimum battery capacity of the bidirectional charger discharging externally. If the battery capacity of the bidirectional charger is higher than the preset value, it means that the bidirectional charger can discharge externally. If the battery capacity of the bidirectional charger is not higher than the preset value, it means that the battery capacity of the bidirectional charger itself is low, and the bidirectional charger may not discharge externally to save its own power.

Step S404: determining not to control the bidirectional charger to discharge electricity to the load.

Step S405: controlling the bidirectional charger to discharge electricity to the load according to a preset discharge strategy corresponding to the determined load type and the battery capacity information.

Step S406: monitoring the battery capacity information of the bidirectional charger in the process of discharging electricity to the load.

Step S407: controlling the bidirectional charger to stop discharging electricity to the load, when determining that the battery capacity of the bidirectional charger is lowered to a preset value according to the monitored battery capacity information.

It should be noted that there is no strict sequential relationship between step S402 and step S403 in the above flow.

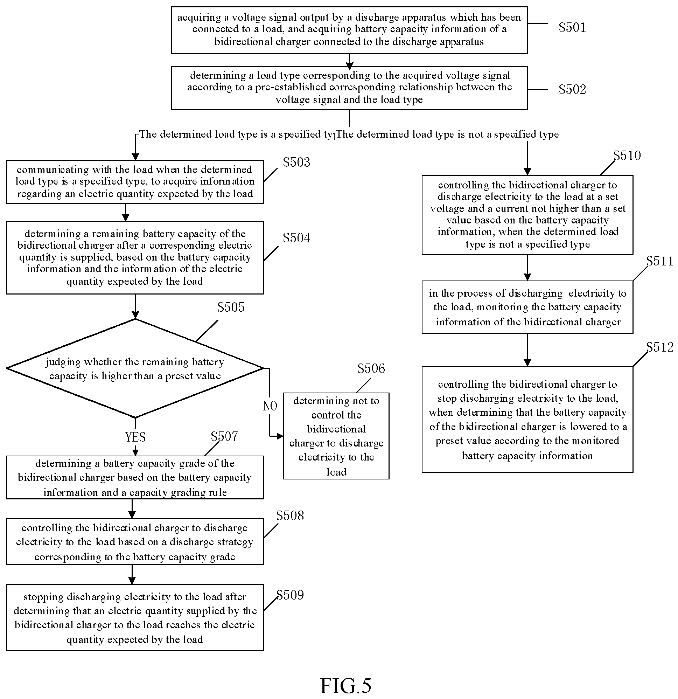

FIG. 5 illustrates a flowchart of still another discharge control method according to an embodiment of the present disclosure, and the method includes the following steps.

Step S501: acquiring a voltage signal output by a discharge apparatus which has been connected to a load, and acquiring battery capacity information of a bidirectional charger connected to the discharge apparatus.

Step S502: determining a load type corresponding to the acquired voltage signal according to a pre-established corresponding relationship between the voltage signal and the load type.

Step S503: communicating with the load when the determined load type is a specified type, to acquire information regarding an electric quantity expected by the load.

Step S504: determining a remaining battery capacity of the bidirectional charger after a corresponding electric quantity is supplied, based on the battery capacity information and the information of the electric quantity expected by the load.

Step S505: judging whether the remaining battery capacity is higher than a preset value; if not, entering S506, and if yes, entering S507.

Step S506: determining not to control the bidirectional charger to discharge electricity to the load.

Step S507: determining a battery capacity grade of the bidirectional charger based on the battery capacity information and a capacity grading rule.

Step S508: controlling the bidirectional charger to discharge electricity to the load based on a discharge strategy corresponding to the battery capacity grade.

Step S509: stopping discharging electricity to the load after determining that an electric quantity supplied by the bidirectional charger to the load reaches the electric quantity expected by the load.

Step S510: controlling the bidirectional charger to discharge electricity to the load at a set voltage and a current not higher than a set value based on the battery capacity information, when the determined load type is not a specified type.

Step S511: in the process of discharging electricity to the load, monitoring the battery capacity information of the bidirectional charger.

Step S512: controlling the bidirectional charger to stop discharging electricity to the load, when determining that the battery capacity of the bidirectional charger is lowered to a preset value according to the monitored battery capacity information.

The above process is described below through an example in which the specified load type is the electric automobile type.

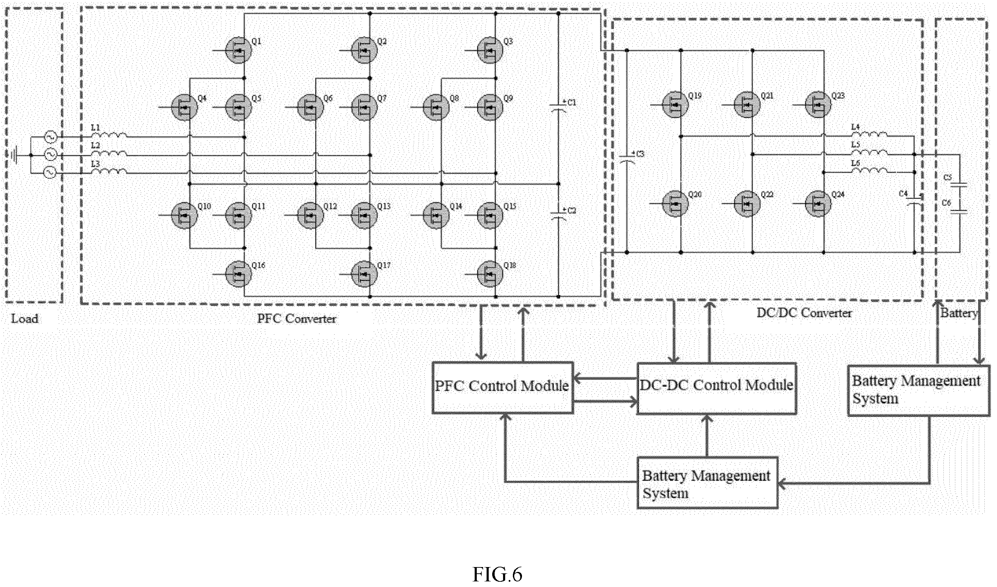

FIG. 6 illustrates a schematic diagram of a discharge control process according to an embodiment of the present disclosure, including a battery, a direct current-direct current (DC/DC) converter, a Power Factor Correction (PFC) converter, a load, a Battery Management System, BMS), an application layer interface module, a DC-DC control module and a PFC control module, in which the PFC converter and the DC/DC converter constitute a bidirectional charger, L1, L2, ..., L6 are inductors, C1, C2, ..., C6 are capacitors, and Q1, Q2, ..., Q24 are MOS tubes.

During implementation, after the discharge apparatus is plugged, the bidirectional charger may automatically control an electronic lock to lock to prevent the discharge apparatus from being accidentally detached; the BMS may send a discharge enabling instruction to an application layer interface module through a CAN bus; the application layer interface module sends the discharge enabling instruction to the DC-DC control module in an activated state through a serial port; the DC-DC control module sends the discharge enabling instruction to the PFC control module through an I/O port, so that the PFC control module performs self-check; the PFC control module outputs a high-level signal to the DC-DC control module after the self-check is successful; after receiving the high-level signal, the DC-DC control module sends the discharge enabling instruction to the PFC control module through the I/O port; and then the DC-DC control module and the PFC control module control ON/OFF of the MOS tube to discharge electricity to the load.

In addition, the BMS may acquire a voltage signal output by the discharge apparatus, and determine the current load type according to the voltage signal and voltage ranges corresponding to different types of loads. If the load type is an electric automobile type (i.e., an automobile-to-automobile discharge), it may be further determined whether three-phase electricity or single-phase electricity is needed for discharge. If the load type is an electric appliance type (i.e., an automobile-to-electric appliance discharge), 220 Vac alternating current may be output to charge the electric appliance through a power source socket, and at this time, the output current may also be limited to be lower than a set value so as not to burn out the electric appliance.

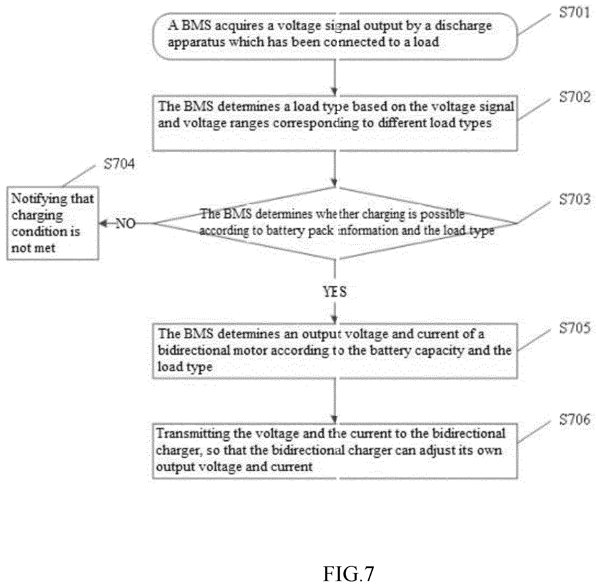

FIG. 7 illustrates a schematic diagram of another discharge control process according to an embodiment of the present disclosure, and the process includes the following steps.

Step S701: a BMS acquires a voltage signal output by a discharge apparatus which has been connected to a load.

Step S702: the BMS determines a load type based on the voltage signal and voltage ranges corresponding to different load types.

Step S703: the BMS determines whether charging is possible according to battery pack information and the load type; if not, entering S704; and if yes, entering S705.

In which, the battery pack information for example is a battery capacity, a battery temperature or an output voltage, and it may be judged that charging is impossible when the battery capacity is lower than a preset value, the battery temperature is higher than a preset value or a battery voltage is higher than a preset value.

In addition, when the load type is an electric automobile type, it may be judged that charging is impossible when a remaining battery capacity is lower than a set value after an electric quantity expected by an electric automobile is supplied.

Step S704: notifying that charging condition is not met.

Step S705: the BMS determines an output voltage and current of a bidirectional motor according to the battery capacity and the load type.

Step S706: transmitting the voltage and the current to the bidirectional charger, so that the bidirectional charger can adjust its own output voltage and current.

In addition, during the charging process, the BMS may also monitor the battery pack information. When it is determined that the battery capacity is lower than the preset value, the battery temperature is higher than the preset value or the battery voltage is higher than the preset value, the bidirectional charger may be controlled to stop discharging electricity to the load, notify the whole automobile through a bus, and display an alarm through an instrument or an indicator light. After stopping discharging, the bidirectional charger may control an electronic lock to unlock when the output voltage is detected as being lower than 36V, so as to prevent an electric shock.

Processes of automobile-to-automobile discharge and automobile-to-electric appliance discharge are respectively described in detail below.

### 1. Automobile-to-automobile discharge

It is assumed that the electric automobile 1 is about to discharge the electric automobile 2. During implementation, the BMS of the electric automobile 1 may be communicated with the BMS of the electric automobile 2 to acquire the power expected by the electric automobile 2; the BMS of the electric automobile 1 may calculate a remaining battery capacity of the bidirectional charger after a corresponding electric quantity is supplied; if the remaining battery capacity is higher than a preset value, such as 30%, a discharge instruction may be sent to the application layer interface module, which sends the discharge enabling instruction through a serial port to start discharging the electric automobile 2. If the remaining battery capacity is not higher than the preset value, such as 30%, then no discharge instruction is sent to the application layer interface module, i.e., electricity is not discharged to the electric automobile 2.

In which, when electricity is discharged to the electric automobile 2, the discharging mode may be switched according to the battery capacity. For example, when the battery capacity is high (corresponding to the first grade), the discharge output voltage is slightly higher than the required voltage of the electric automobile 2, and the power is fully output, thereby quickly charging the electric automobile 2; when the battery capacity is moderate (corresponding to the second grade), the discharge output voltage may be reduced and the discharge current is kept unchanged; and when the battery capacity is slightly low (corresponding to the third grade), the output power is gradually reduced when the output conditions are met. Under this control strategy, the power utilization rate of the battery can be improved.

### 2. Automobile-to-electric appliance discharge

When electricity is discharged to an electric appliance, the control principle is different from that adopted for discharging electricity to the electric automobile. The control logic does not need to be as complicated as that for discharging electricity to the electric automobile. Some MOS tubes and the functional circuit in the overall architecture will enter a sleep state, thereby reducing the overall power consumption and achieving a better utilization effect on the battery. In addition, considering safety and practicality, the maximum output current may be limited.

When the method according to the embodiments of the present disclosure is implemented by software or hardware or a combination thereof, the electronic device may include a plurality of functional modules, each of which may include software, hardware or a combination thereof.

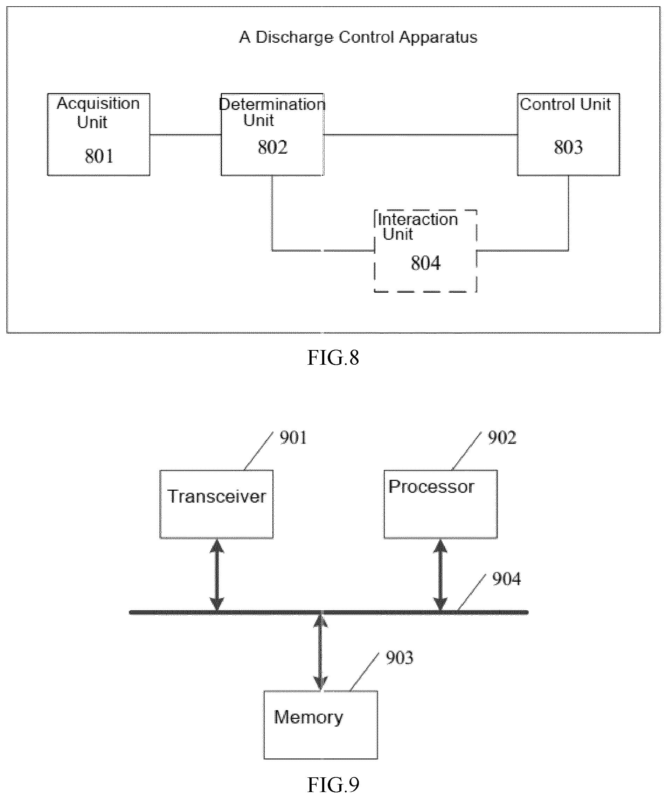

FIG. 8 illustrates a structural diagram of a discharge control apparatus according to an embodiment of the present disclosure, including an acquisition unit 801, a determination unit 802, and a control unit 803.

The acquisition unit 801 is configured to acquire a voltage signal output by a discharge apparatus which has been connected to a load, and acquire battery capacity information of a bidirectional charger connected to the discharge apparatus;

The determining unit 802 is configured to determine a load type corresponding to the acquired voltage signal according to a pre-established corresponding relationship between the voltage signal and the load type;

The control unit 803 is configured to control the bidirectional charger to discharge electricity to the load according to a preset discharge strategy corresponding to the determined load type and the battery capacity information.

In some possible embodiments, when the determined load type is a specified type, the control unit 803 is specifically configured to:
determine a battery capacity grade of the bidirectional charger based on the battery capacity information and a capacity grading rule; and
control the bidirectional charger to discharge electricity to the load based on a discharge strategy corresponding to the battery capacity grade.

In some possible embodiments, the control unit 803 is specifically configured to:

Determining a voltage and a current during discharge based on the discharge strategy corresponding to the battery capacity grade; and
control the bidirectional charger to discharge electricity to the load based on the voltage and the current.

In some possible embodiments, the control unit 803 is specifically configured to:
when the battery capacity grade is a first grade, determine a maximum current at which bidirectional charger discharging at a specified voltage, and determine the specified voltage and the maximum current as the voltage and the current during discharge respectively;
when the battery capacity grade is a second grade, determine a maximum voltage at which bidirectional charger discharging at a specified current, and determine the maximum voltage and the specified current as the voltage and the current during discharge respectively;
when the battery capacity grade is a third grade, determine a maximum voltage and a maximum current that can be supplied by the bidirectional charger, and determine the maximum voltage and the maximum current that can be supplied as the voltage and the current during discharge respectively;
in which battery capacities corresponding to the first grade, the second grade and the third grade are decreased in sequence.

In some possible embodiments, the discharge control apparatus includes:
an interaction unit 804 configured to communicate with the load to acquire information of electric quantity expected by the load;
determine a remaining battery capacity of the bidirectional charger after a corresponding electric quantity is supplied, based on the battery capacity information and the information of the electric quantity expected by the load;
the control unit 803 is specifically configured to control the bidirectional charger to discharge electricity to the load after determining that the remaining battery capacity is higher than a preset value.

In some possible embodiments, the control unit 803 is further configured to:
stop discharging electricity to the load after determining that an electric quantity supplied by the bidirectional charger to the load reaches the electric quantity expected by the load.

In some possible embodiments, when the determined load type is not a specified type, the control unit 803 is specifically configured to:
control the bidirectional charger to discharge electricity to the load at a set voltage and a current not higher than a set value based on the battery capacity information.

In some possible embodiments, the control unit 803 is further configured to:
control the bidirectional charger to discharge electricity to the load after the battery capacity information indicates that the battery capacity of the bidirectional charger is higher than a preset value.

In some possible embodiments, the acquisition unit 801 is further configured to monitor the battery capacity information of the bidirectional charger in the process of discharging electricity to the load;
The control unit 803 is further configured to control the bidirectional charger to stop discharging electricity to the load when determining that the battery capacity of the bidirectional charger is lowered to a preset value according to the monitored battery capacity information.

In some possible embodiments, the specified type is an electric automobile type.

The division of the modules in the embodiments of the present disclosure is schematic, which is only a logical function division, and there may be other division ways in actual implementation. In addition, each functional module in the embodiments of the present disclosure may be integrated into one processor, or may exist physically alone, or two or more modules may be integrated into one module. The coupling between the modules may be realized by some interfaces, which are usually electrical communication interfaces, but not excluding mechanical interfaces or those of other forms. Therefore, modules described as separate components may or may not be physically separated, and may be located in one place or distributed to different locations of the same or different devices. The integrated modules may be implemented in the form of hardware or software functional modules.

An embodiment of the present disclosure further provides an electric automobile, which includes the aforementioned discharge control apparatus.

FIG. 9 illustrates a structural diagram of an electronic device according to an embodiment of the present disclosure. The electronic device includes physical devices such as a transceiver 901 and a processor 902, in which the processor 902 may be a Central Processing Unit (CPU), a microprocessor, an application specific integrated circuit, a programmable logic circuit, a large-scale integrated circuit, a digital processing unit or the like. The transceiver 901 is configured to transmit and receive data between the electronic device and other devices.

The electronic device may further include a memory 903 configured to store software instructions executed by the processor 902, and of course may also store some other data required by the electronic device, such as identification information of the electronic device, encryption information of the electronic device, user data, etc. The memory 903 may be a volatile memory, such as a Random-Access Memory (RAM); the memory 903 may also be a non-volatile memory, such as a Read-Only Memory (ROM), a flash memory, a Hard Disk Drive (HDD) or a Solid-State Drive (SSD); or the memory 903 is any other medium that can carry or store desired program codes in the form of instructions or data structures and can be accessed by a computer, but is not limited thereto. The memory 903 may be any combination of the above memories.

The specific connection medium among the processor 902, the memory 903 and the transceiver 901 is not specifically limited in the embodiment of the present disclosure. In FIG. 9, the embodiment of the present disclosure is only illustrated through an example in which the memory 903, the processor 902 and the transceiver 901 are connected through a bus 904, which is indicated by a thick line in FIG. 9, and the connection modes for other components are not limited thereto. The bus may be classified into an address bus, a data bus, a control bus, etc. For the convenience of representation, only one thick line is used in FIG. 9, but it does not mean that there is only one bus or one type of bus.

The processor 902 may be dedicated hardware or a processor running software. When being capable of running software, the processor 902 reads a software instruction stored in the memory 903, and performs the discharge control method involved in the aforementioned embodiments under the drive of the software instruction.

An embodiment of the present disclosure further provides a storage medium, in which when an instruction in the storage medium is executed by a processor of an electronic device, the electronic device can perform the discharge control method involved in the aforementioned embodiments.

In some possible embodiments, various aspects of the discharge control method according to the present disclosure may also be implemented in the form of a program product, which includes program codes, in which when the program product is run on an electronic device, the program codes enable the electronic device to perform the discharge control method involved in the aforementioned embodiments.

The program product may adopt any combination of one or more readable media. The readable medium may be a readable signal medium or a readable storage medium. The readable storage medium may be, for example, but not limited to, an electrical, magnetic, optical, electromagnetic, infrared or semiconductor system, apparatus or device, or any combination thereof. More specific examples (a non-exhaustive list) of the readable storage medium include: an electric connection with one or more wires, a portable disk, a hard disk, an RAM, an ROM, an Erasable Programmable Read-Only Memory (EPROM), a flash memory, an optical fiber, a Compact Disk Read Only Memory (CD-ROM), an optical storage device, a magnetic storage device, or any suitable combination thereof.

The program product for discharge control in the embodiments of the present disclosure may adopt CD-ROM and include program codes, and may be run on a computing device. However, the program product of the present disclosure is not limited thereto. The readable storage medium herein may be any tangible medium containing or storing a program, which may be used by or in combination with an instruction execution system, apparatus or device.

The readable signal medium may include a data signal propagated in a baseband or as part of a carrier wave, and readable program codes are carried therein. This propagated data signal may take various forms, including but not limited to an electromagnetic signal, an optical signal or any suitable combination thereof. The readable signal medium may also be any readable medium other than the readable storage medium, which can send, propagate or transmit a program to be used by or in combination with an instruction execution system, apparatus or device.

The program codes included in the readable medium may be transmitted by any suitable medium, including but not limited to a wireless medium, a wired medium, an optical cable, a Radio Frequency (RF) medium, etc., or any suitable combination thereof.

Program codes for performing the operations of the present disclosure may be written in any combination of one or more programming languages, including object-oriented programming languages such as Java, C++, etc., and conventional procedural programming languages such as 'C' or the like. The program codes may be completely executed on a user computing device, partially executed on the user device, executed as an independent software package, partially executed on the user computing device and partially executed on a remote computing device, or completely executed on the remote computing device or a server. In the case involving the remote computing device, the remote computing device may be connected to the user computing device through any kind of network, such as a Local Area Network (LAN) or a Wide Area Network (WAN), or may be connected to an external computing device (e.g., through the Internet using an Internet service provider).

It should be noted that although several units or sub-units of the apparatus are mentioned in the above detailed description, such division is only exemplary and not mandatory. Actually, according to the embodiments of the present disclosure, the features and functions of two or more units described above may be embodied in one unit. On the contrary, the features and functions of one unit described above may be further divided into a plurality of units to be embodied.

Further, although the operations of the method of the present disclosure are described in a particular order in the drawings, it is not required or implied that these operations must be performed in this particular order, or that all the illustrated operations must be performed to achieve the desired results. Additionally or alternatively, some steps may be omitted, a plurality of steps may be combined into one step for execution, and/or one step may be decomposed into a plurality of steps for execution.

It should be understood by those skilled in the art that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to disk storage, CD-ROM, optical storage, etc.) containing computer-usable program codes.

The present disclosure is described with reference to a flowchart and/or block diagram of the method, apparatus (system) and a computer program product according to the embodiments of the present disclosure. It should be understood that each flow and/or block in the flowchart and/or block diagram and combinations thereof can be realized by computer program instructions. These computer program instructions can be provided to a general computer, a dedicated computer, an embedded processor or a processor of other programmable data processing device to generate a machine, so that the instructions performed by the computer or the processor of other programmable data processing devices generate the apparatus for implementing the function designated in one flow or a plurality of flows in the flowchart and/or a block or a plurality of blocks in the block diagram.

These computer program instructions may also be stored in a computer readable memory capable of directing the computer or other programmable data processing devices to operate in a specific manner, so that the instructions stored in the computer readable memory generate a manufactured article including an instruction device that implements the function(s) designated in one flow or a plurality of flows in the flowchart and/or a block or a plurality of blocks in the block diagram.

These computer program instructions may also be loaded onto a computer or other programmable data processing devices, so that a series of operation steps is executed on the computer or other programmable devices to generate the processing realized by the computer, therefore the instructions executed on the computer or other programmable devices provide the steps for implementing the function designated in one flow or a plurality of flows in the flow chart and/or a block or a plurality of blocks in the block diagram.

Although the exemplary embodiments of the present disclosure have been described, those skilled in the art can make additional changes and modifications to these embodiments once acquiring the basic inventive concepts. Therefore, the appended claims are intended to be interpreted as including the exemplary embodiment and all changes and modifications that fall within the scope of the present disclosure.

## Claims

1. A discharge control method applied to an electric automobile (1), comprising:
acquiring a voltage signal output by a discharge apparatus (30) which has been connected to a load (2), and acquiring battery capacity information of a battery of a bidirectional charger (12) connected to the discharge apparatus (30);
determining a load type corresponding to the acquired voltage signal according to a pre-established corresponding relationship between the voltage signal and the load type; and
controlling the bidirectional charger (12) to discharge electricity to the load (2) according to a preset discharge strategy corresponding to the determined load type and the battery capacity information; **characterized in that**, when the determined load type is a specified type, controlling the bidirectional charger (12) to discharge electricity to the load (2) comprises:
determining a battery capacity grade of the bidirectional (12) charger based on the battery capacity information and a capacity grading rule, wherein the capacity grading rule comprises: if the battery capacity of the bidirectional charger (12) is between 100% and 80%, the battery capacity grade is determined as a first grade; if the battery capacity of the bidirectional charger (12) is between 80% and 50%, the battery capacity grade is determined as a second grade , and if the battery capacity of the bidirectional charger (12) is between 50% and 30%, the battery capacity grade is determined as a third grade; and
controlling the bidirectional charger (12) to discharge electricity to the load (2) based on a discharge strategy corresponding to the battery capacity grade, comprising:
determining a voltage and a current during discharge based on the discharge strategy corresponding to the battery capacity grade; and
controlling the bidirectional charger (12) to discharge electricity to the load (2) based on the voltage and the current, comprising:
when the battery capacity grade is the first grade, determining a maximum current at which bidirectional charger (12) discharging at a specified voltage, and determining the specified voltage and the maximum current as the voltage and the current during discharge respectively;
when the battery capacity grade is the second grade, determining a maximum voltage at which bidirectional charger (12) discharging at a specified current, and determining the maximum voltage and the specified current as the voltage and the current during discharge respectively; and
when the battery capacity grade is the third grade, determining a maximum voltage and a maximum current that the bidirectional charger (12) is able to supply, and determining the maximum voltage and the maximum current that the bidirectional charger (12) is able to supply as the voltage and the current during discharge respectively.

2. The method according to claim 1, further comprising:
communicating with the load (2) to acquire information regarding an electric quantity expected by the load (2);
determining a remaining battery capacity of the bidirectional charger (12) after a corresponding electric quantity is supplied, based on the battery capacity information and the information of the electric quantity expected by the load (2); and
controlling the bidirectional charger (12) to discharge electricity to the load (2) after determining that the remaining battery capacity is higher than a preset value.

3. The method according to claim 2, further comprising:
stopping discharging electricity to the load (2) after determining that an electric quantity supplied by the bidirectional charger (12) to the load (2) reaches the electric quantity expected by the load (2).

4. The method according to claim 1, wherein when the determined load type is not a specified type, controlling the bidirectional charger (12) to discharge electricity to the load (2) according to a preset discharge strategy corresponding to the determined load type and the battery capacity information comprises:
controlling the bidirectional charger (12) to discharge electricity to the load (2) at a set voltage and a current not higher than a set value based on the battery capacity information.

5. The method according to claim 1 or 4, further comprising:
controlling the bidirectional charger (12) to discharge electricity to the load (2) after the battery capacity information indicates that the battery capacity of the bidirectional charger (12) is higher than a preset value; or
the method further comprising:
monitoring the battery capacity information of the bidirectional charger (12) in the process of discharging electricity to the load (2); and
controlling the bidirectional charger (12) to stop discharging electricity to the load (2), when determining that the battery capacity of the bidirectional charger (12) is lowered to a preset value according to the monitored battery capacity information.

6. The method according to claim 1 or 4, wherein the specified type is an electric automobile type.

7. A discharge control apparatus applied to an electric automobile (1), comprising:
an acquisition unit (801) configured to acquire a voltage signal output by a discharge apparatus (30) which has been connected to a load (2), and acquire battery capacity information of a battery of a bidirectional charger (12) connected to the discharge apparatus (30);
a determining unit (802) configured to determine a load type corresponding to the acquired voltage signal according to a pre-established corresponding relationship between the voltage signal and the load type; and
a control unit (803) configured to control the bidirectional charger (12) to discharge electricity to the load (2) according to a preset discharge strategy corresponding to the determined load type and the battery capacity information; **characterized in that**, when the determined load type is a specified type, the control unit is specifically configured to:
determine a battery capacity grade of the bidirectional charger (12) based on the battery capacity information and a capacity grading rule, wherein the capacity grading rule comprises: if the battery capacity of the bidirectional charger (12) is between 100% and 80%, the battery capacity grade is determined as a first grade; if the battery capacity of the bidirectional charger (12) is between 80% and 50%, the battery capacity grade is determined as a second grade , and if the battery capacity of the bidirectional charger (12) is between 50% and 30%, the battery capacity grade is determined as a third grade; and
control the bidirectional charger (12) to discharge electricity to the load (2) based on a discharge strategy corresponding to the battery capacity grade, comprising:
determine a voltage and a current during discharge (12) based on the discharge strategy corresponding to the battery capacity grade; and
control the bidirectional charger (12) to discharge electricity to the load (2) based on the voltage and the current, comprising:
when the battery capacity grade is the first grade, determine a maximum current at which bidirectional charger (12) discharging at a specified voltage, and determine the specified voltage and the maximum current as the voltage and the current during discharge respectively;
when the battery capacity grade is the second grade, determine a maximum voltage at which bidirectional charger (12) discharging at a specified current, and determine the maximum voltage and the specified current as the voltage and the current during discharge respectively; and
when the battery capacity grade is the third grade, determine a maximum voltage and a maximum current that can be supplied by the bidirectional charger (12), and determine the maximum voltage and the maximum current that can be supplied as the voltage and the current during discharge respectively

8. The apparatus according to claim 7, further comprising:
an interaction unit (804) configured to communicate with the load (2) to acquire information regarding an electric quantity expected by the load; and determine a remaining battery capacity of the bidirectional charger (12) after a corresponding electric quantity is supplied, based on the battery capacity information and the information of the electric quantity expected by the load (2); and
the control unit (803) is further specifically configured to control the bidirectional charger (12) to discharge electricity to the load (2) after determining that the remaining battery capacity is higher than a preset value.

9. An electronic device (900), comprising: at least one processor (902), and a memory (903) communicatively connected thereto, wherein:
the memory (903) stores an instruction executable by the at least one processor (902), and when executed by the at least one processor (902), the instruction enables the at least one processor (902) to perform the steps of the method according to any of claims 1 to 6.

10. A storage medium, wherein when an instruction in the storage medium is executed by a processor (902) of an electronic device (900), the electronic device (900) can perform the steps of the method according to any of claims 1 to 6.

## Patentansprüche

1. Entladungssteuerungsverfahren für ein Elektrofahrzeug (1), aufweisend:
Erfassen eines Spannungssignals, das von einer Entladungsvorrichtung (30) ausgegeben wird, die mit einer Last (2) verbunden ist, und Erfassen von Batteriekapazitätsinformationen einer Batterie eines bidirektionalen Ladegeräts (12), das mit der Entladungsvorrichtung (30) verbunden ist;
Bestimmen eines Lasttyps, der dem erfassten Spannungssignal entspricht, gemäß einer vorab festgelegten Zuordnung zwischen dem Spannungssignal und dem Lasttyp; und
Steuern des bidirektionalen Ladegeräts (12), um Elektrizität an die Last (2) gemäß einer voreingestellten Entladungsstrategie entsprechend dem bestimmten Lasttyp und den Batteriekapazitätsinformationen zu entladen; **dadurch gekennzeichnet, dass**, wenn der bestimmte Lasttyp ein spezifizierter Typ ist, das Steuern des bidirektionalen Ladegeräts (12), um Elektrizität an die Last (2) zu entladen, aufweist:
Bestimmen einer Batteriekapazitätsstufe des bidirektionalen Ladegeräts (12) auf der Grundlage der Batteriekapazitätsinformationen und einer Kapazitätsstufungsregel, wobei die Kapazitätsstufungsregel aufweist: wenn die Batteriekapazität des bidirektionalen Ladegeräts (12) zwischen 100 % und 80 % liegt, Bestimmen der Batteriekapazitätsstufe als erste Stufe; wenn die Batteriekapazität des bidirektionalen Ladegeräts (12) zwischen 80 % und 50 % liegt, Bestimmen der Batteriekapazitätsstufe als zweite Stufe, und wenn die Batteriekapazität des bidirektionalen Ladegeräts (12) zwischen 50 % und 30 % liegt, Bestimmen der Batteriekapazitätsstufe als dritte Stufe; und
Steuern des bidirektionalen Ladegeräts (12), um Strom an die Last (2) auf der Grundlage einer Entladestrategie zu entladen, die der Batteriekapazitätsstufe entspricht, aufweisend:
Bestimmen einer Spannung und eines Stroms während der Entladung auf der Grundlage der Entladungsstrategie, die der Batteriekapazitätsstufe entspricht; und
Steuern des bidirektionalen Ladegeräts (12), um Strom an die Last (2) auf der Grundlage der Spannung und des Stroms zu entladen, aufweisend:
wenn die Batteriekapazitätsstufe die erste Stufe ist, Bestimmen eines maximalen Stroms, bei dem das bidirektionale Ladegerät (12) bei einer bestimmten Spannung entlädt, und Bestimmen der bestimmten Spannung und des maximalen Stroms als die Spannung bzw. den Strom während der Entladung;
wenn die Batteriekapazitätsstufe die zweite Stufe ist, Bestimmen einer maximalen Spannung, bei der das bidirektionale Ladegerät (12) mit einem bestimmten Strom entlädt, und Bestimmen der maximalen Spannung und des bestimmten Stroms als Spannung bzw. Strom während der Entladung; und
wenn die Batteriekapazitätsstufe die dritte Stufe ist, Bestimmen einer maximalen Spannung und eines maximalen Stroms, die bzw. der vom bidirektionalen Ladegerät (12) geliefert werden kann, und Bestimmen der maximalen Spannung und des maximalen Stroms, die bzw. der vom bidirektionalen Ladegerät (12) geliefert werden können, als Spannung bzw. Strom während der Entladung.

2. Verfahren nach Anspruch 1, das des Weiteren aufweist:
Kommunizieren mit der Last (2), um Informationen über eine von der Last (2) erwartete elektrische Menge zu erfassen;
Bestimmen einer verbleibenden Batteriekapazität des bidirektionalen Ladegeräts (12) nach dem Liefern einer entsprechenden elektrischen Größe auf der Grundlage der Batteriekapazitätsinformationen und der Informationen über die von der Last (2) erwartete elektrische Größe; und
Steuern des bidirektionalen Ladegeräts (12), um Strom an die Last (2) zu entladen, nachdem festgestellt wurde, dass die verbleibende Batteriekapazität höher als ein voreingestellter Wert ist.

3. Verfahren nach Anspruch 2, das des Weiteren aufweist:
Beenden der Entladung von Strom an die Last (2), nachdem festgestellt wurde, dass eine vom bidirektionalen Ladegerät (12) an die Last (2) gelieferte Strommenge die von der Last (2) erwartete Strommenge erreicht.

4. Verfahren nach Anspruch 1, bei dem, wenn der ermittelte Lasttyp kein spezifizierter Typ ist, das Steuern des bidirektionalen Ladegeräts (12), um Strom an die Last (2) gemäß einer voreingestellten Entladungsstrategie entsprechend dem ermittelten Lasttyp und den Batteriekapazitätsinformationen zu entladen, aufweist:
Steuern des bidirektionalen Ladegeräts (12), um Strom an die Last (2) mit einer eingestellten Spannung und einem Strom, der nicht höher als ein eingestellter Wert ist, basierend auf den Batteriekapazitätsinformationen zu entladen.

5. Verfahren nach Anspruch 1 oder 4, das des Weiteren aufweist:
Steuern des bidirektionalen Ladegeräts (12), um Strom an die Last (2) zu entladen, nachdem die Batteriekapazitätsinformationen anzeigen, dass die Batteriekapazität des bidirektionalen Ladegeräts (12) höher als ein voreingestellter Wert ist; oder
wobei das Verfahren des Weiteren aufweist:
Überwachen der Batteriekapazitätsinformationen des bidirektionalen Ladegeräts (12) während des Entladens von Strom an die Last (2); und
Steuern des bidirektionalen Ladegeräts (12), um die Entladung von Strom an die Last (2) zu stoppen, wenn festgestellt wird, dass die Batteriekapazität des bidirektionalen Ladegeräts (12) gemäß den überwachten Batteriekapazitätsinformationen auf einen voreingestellten Wert gesunken ist.

6. Verfahren nach Anspruch 1 oder 4, bei dem der angegebene Typ ein Elektroautotyp ist.

7. Entladungssteuerungsvorrichtung für ein Elektrofahrzeug (1), aufweisend:
eine Erfassungseinheit (801), die so konfiguriert ist, dass sie ein von einer Entladungsvorrichtung (30), die mit einer Last (2) verbunden ist, ausgegebenes Spannungssignal erfasst und Batteriekapazitätsinformationen einer Batterie eines mit der Entladungsvorrichtung (30) verbundenen bidirektionalen Ladegeräts (12) erfasst;
eine Bestimmungseinheit (802), die so konfiguriert ist, dass sie einen Lasttyp entsprechend dem erfassten Spannungssignal gemäß einer vorab festgelegten Zuordnung zwischen dem Spannungssignal und dem Lasttyp bestimmt; und
eine Steuereinheit (803), die so konfiguriert ist, dass sie das bidirektionale Ladegerät (12) so steuert, dass es gemäß einer voreingestellten Entladungsstrategie, die dem ermittelten Lasttyp und den Informationen über die Batteriekapazität entspricht, Strom an die Last (2) entlädt; **dadurch gekennzeichnet, dass** die Steuereinheit, wenn der ermittelte Lasttyp ein bestimmter Typ ist, speziell so konfiguriert ist, dass sie:
eine Batteriekapazitätsstufe des bidirektionalen Ladegeräts (12) auf der Grundlage der Batteriekapazitätsinformationen und einer Kapazitätsstufungsregel bestimmt, wobei die Kapazitätsstufungsregel aufweist: wenn die Batteriekapazität des bidirektionalen Ladegeräts (12) zwischen 100 % und 80 % liegt, Bestimmen der Batteriekapazitätsstufe als erste Stufe; wenn die Batteriekapazität des bidirektionalen Ladegeräts (12) zwischen 80 % und 50 % liegt, Bestimmen der Batteriekapazitätsstufe als zweite Stufe, und wenn die Batteriekapazität des bidirektionalen Ladegeräts (12) zwischen 50 % und 30 % liegt, Bestimmen der Batteriekapazitätsstufe als dritte Stufe; und
Steuern des bidirektionalen Ladegeräts (12), um Strom an die Last (2) auf der Grundlage einer Entladestrategie entsprechend der Batteriekapazitätsstufe zu entladen, aufweisend:
Bestimmen einer Spannung und eines Stroms während der Entladung (12) auf der Grundlage der Entladungsstrategie, die dem Batteriekapazitätsgrad entspricht; und
Steuern des bidirektionalen Ladegeräts (12), um Strom an die Last (2) auf der Grundlage der Spannung und des Stroms zu entladen, aufweisend:
wenn die Batteriekapazitätsstufe die erste Stufe ist, Bestimmen eines maximalen Stroms, bei dem das bidirektionale Ladegerät (12) bei einer bestimmten Spannung entlädt, und Bestimmen der bestimmten Spannung und des maximalen Stroms als Spannung bzw. Strom während der Entladung;
wenn die Batteriekapazitätsstufe die zweite Stufe ist, Bestimmen einer maximalen Spannung, bei der das bidirektionale Ladegerät (12) mit einem bestimmten Strom entlädt, und Bestimmen der maximalen Spannung und des bestimmten Stroms als Spannung bzw. Strom während der Entladung; und
wenn die Batteriekapazitätsstufe die dritte Stufe ist, Bestimmen einer maximalen Spannung und eines maximalen Stroms, die vom bidirektionalen Ladegerät (12) geliefert werden können, und Bestimmen der maximalen Spannung und des maximalen Stroms, die vom bidirektionalen Ladegerät (12) geliefert werden können, als Spannung bzw. Strom während der Entladung bestimmen.

8. Vorrichtung nach Anspruch 7, die des Weiteren aufweist:
eine Interaktionseinheit (804), die so konfiguriert ist, dass sie mit der Last (2) kommuniziert, um Informationen über eine von der Last erwartete elektrische Größe zu erfassen; und die verbleibende Batteriekapazität des bidirektionalen Ladegeräts (12) nach der Lieferung einer entsprechenden elektrischen Größe auf der Grundlage der Batteriekapazitätsinformationen und der Informationen über die von der Last (2) erwartete elektrische Größe zu bestimmen; und
wobei die Steuereinheit (803) des Weiteren speziell dafür konfiguriert ist, das bidirektionale Ladegerät (12) so zu steuern, dass es Strom an die Last (2) entlädt, nachdem festgestellt wurde, dass die verbleibende Batteriekapazität höher als ein voreingestellter Wert ist.

9. Elektronisches Gerät (900), aufweisend: mindestens einen Prozessor (902) und einen damit in Verbindung stehenden Speicher (903), wobei
der Speicher (903) eine Anweisung speichert, die von dem mindestens einen Prozessor (902) ausgeführt werden kann, und wenn sie von dem mindestens einen Prozessor (902) ausgeführt wird, die Anweisung es dem mindestens einen Prozessor (902) ermöglicht, die Schritte des Verfahrens gemäß einem der Ansprüche 1 bis 6 auszuführen.

10. Speichermedium, wobei, wenn ein Befehl in dem Speichermedium von einem Prozessor (902) eines elektronischen Geräts (900) ausgeführt wird, das elektronische Gerät (900) die Schritte des Verfahrens gemäß einem der Ansprüche 1 bis 6 ausführen kann.

## Revendications

1. Procédé de commande de décharge pour un véhicule électrique (1), comprenant:
acquérir un signal de tension émis par un dispositif de décharge (30) connecté à une charge (2) et acquérir informations sur la capacité d'une batterie d'un chargeur bidirectionnel (12) connecté au dispositif de décharge (30);
déterminer un type de charge correspondant au signal de tension détecté, conformément à une correspondance prédéterminée entre le signal de tension et le type de charge; et
commander le chargeur bidirectionnel (12) afin de décharger de l'électricité vers la charge (2) conformément à une stratégie de décharge prédéfinie correspondant au type de charge déterminé et aux informations de capacité de batterie; **caractérisé en ce que**, lorsque le type de charge déterminé est un type spécifié, le contrôle du chargeur bidirectionnel (12) pour décharger de l'électricité vers la charge (2) comprend:
déterminer un niveau de capacité de batterie du chargeur bidirectionnel (12) sur la base des informations de capacité de batterie et d'une règle de niveau de capacité, la règle de niveau de capacité comprenant: lorsque la capacité de batterie du chargeur bidirectionnel (12) est comprise entre 100 % et 80 %, déterminer le niveau de capacité de batterie comme étant un premier niveau; lorsque la capacité de batterie du chargeur bidirectionnel (12) est comprise entre 80 % et 50 %, déterminer le niveau de capacité de batterie comme étant un deuxième niveau, et lorsque la capacité de batterie du chargeur bidirectionnel (12) est comprise entre 50 % et 30 %, déterminer de manière le niveau de capacité de batterie comme étant un troisième niveau; et
commander le chargeur bidirectionnel (12) pour décharger du courant vers la charge (2) sur la base d'une stratégie de décharge correspondant au niveau de capacité de la batterie, comprenant:
déterminer une tension et d'un courant pendant la décharge sur la base de la stratégie de décharge correspondant au niveau de capacité de la batterie; et
commander le chargeur bidirectionnel (12) pour décharger du courant vers la charge (2) sur la base de la tension et du courant, comprenant:
lorsque le niveau de capacité de la batterie est le premier niveau, déterminer un courant maximal auquel le chargeur bidirectionnel (12) se décharge à une tension spécifiée, et déterminer la tension spécifiée et du courant maximal comme étant respectivement la tension et le courant pendant la décharge;
lorsque le niveau de capacité de la batterie est le deuxième niveau, déterminer une tension maximale à laquelle le chargeur bidirectionnel (12) se décharge à un courant spécifique, et déterminer la tension maximale et le courant spécifique comme étant respectivement la tension et le courant pendant la décharge; et
si le niveau de capacité de la batterie est le troisième niveau, déterminer une tension maximale et un courant maximal qui peuvent être fournis par le chargeur bidirectionnel (12), et déterminer la tension maximale et le courant maximal qui peuvent être fournis par le chargeur bidirectionnel (12) comme tension et courant respectivement pendant la décharge.

2. Procédé selon la revendication 1, comprenant en outre:
communiquer avec la charge (2) afin d'acquérir des informations sur une quantité d'électricité attendue par la charge (2);
déterminer une capacité restante de la batterie du chargeur bidirectionnel (12) après la fourniture d'une quantité d'électricité correspondant sur la base des informations sur la capacité de la batterie et des informations sur la quantité d'électricité attendue par la charge (2); et
commander le chargeur bidirectionnel (12) pour décharger du courant vers la charge (2) après avoir déterminé que la capacité restante de la batterie est supérieure à une valeur prédéfinie.

3. Procédé selon la revendication 2, comprenant en outre:
arrêter la décharge de courant vers la charge (2) après avoir déterminé qu'une quantité de courant fournie par le chargeur bidirectionnel (12) à la charge (2) atteint la quantité de courant attendue par la charge (2).

4. Procédé selon la revendication 1, dans lequel, lorsque le type de charge déterminé n'est pas un type spécifié, la commande du chargeur bidirectionnel (12) pour décharger du courant vers la charge (2) selon une stratégie de décharge prédéfinie correspondant au type de charge déterminé et aux informations de capacité de batterie comprend:
commander le chargeur bidirectionnel (12) afin de décharger le courant vers la charge (2) à une tension réglée et à un courant qui n'est pas supérieur à une valeur réglée, sur la base des informations de capacité de la batterie.

5. Procédé selon la revendication 1 ou 4, comprenant en outre:
commander le chargeur bidirectionnel (12) pour décharger du courant vers la charge (2) après que les informations de capacité de batterie indiquent que la capacité de batterie du chargeur bidirectionnel (12) est supérieure à une valeur prédéfinie; ou
le procédé comprenant en outre:
surveiller les informations de capacité de batterie du chargeur bidirectionnel (12) pendant la décharge de courant vers la charge (2); et
commander le chargeur bidirectionnel (12) afin d'arrêter la décharge d'électricité vers la charge (2) lorsqu'il est déterminé que la capacité de la batterie du chargeur bidirectionnel (12) est tombée à une valeur prédéfinie selon les informations de capacité de batterie surveillées.

6. Procédé selon la revendication 1 ou 4, dans lequel le type spécifié est un type de voiture électrique.

7. Dispositif de commande de décharge pour un véhicule électrique (1), comprenant:
une unité d'acquisition (801) configurée pour acquérir un signal de tension émis par un dispositif de décharge (30) connecté à une charge (2) et pour acquérir des informations de capacité de batterie d'une batterie d'un chargeur bidirectionnel (12) connecté au dispositif de décharge (30);
une unité de détermination (802) configurée pour déterminer un type de charge correspondant au signal de tension détecté selon une correspondance prédéfinie entre le signal de tension et le type de charge; et
une unité de commande (803) configurée pour commander le chargeur bidirectionnel (12) afin qu'il décharge du courant vers la charge (2) conformément à une stratégie de décharge prédéfinie correspondant au type de charge déterminé et aux informations sur la capacité de la batterie; **caractérisé en ce que**, lorsque le type de charge déterminé est un type particulier, l'unité de commande est spécialement configurée pour:
déterminer un niveau de capacité de batterie du chargeur bidirectionnel (12) sur la base des informations de capacité de batterie et d'une règle de niveau de capacité, la règle de niveau de capacité comprenant: lorsque la capacité de batterie du chargeur bidirectionnel (12) est comprise entre 100 % et 80 %, déterminer le niveau de capacité de batterie comme étant un premier niveau; lorsque la capacité de batterie du chargeur bidirectionnel (12) est comprise entre 80 % et 50 %, déterminer le niveau de capacité de batterie comme étant le deuxième niveau, et lorsque la capacité de batterie du chargeur bidirectionnel (12) est comprise entre 50 % et 30 %, déterminer le niveau de capacité de batterie comme étant le troisième niveau; et
commander le chargeur bidirectionnel (12) pour décharger du courant vers la charge (2) sur la base d'une stratégie de décharge correspondant au niveau de capacité de la batterie, comprenant:
déterminer une tension et un courant pendant la décharge (12) sur la base de la stratégie de décharge correspondant au niveau de capacité de la batterie; et
commander le chargeur bidirectionnel (12) pour décharger du courant vers la charge (2) sur la base de la tension et du courant, comprenant:
lorsque le niveau de capacité de la batterie est le premier niveau, déterminer un courant maximal auquel le chargeur bidirectionnel (12) se décharge à une tension déterminée, et déterminer la tension déterminée et le courant maximal comme tension et courant respectivement pendant la décharge;
lorsque le niveau de capacité de la batterie est le deuxième niveau, déterminer une tension maximale à laquelle le chargeur bidirectionnel (12) se décharge à un courant spécifique, et déterminer la tension maximale et le courant spécifique comme tension et courant respectivement pendant la décharge; et
lorsque le niveau de capacité de la batterie est le troisième niveau, déterminer une tension maximale et un courant maximal qui peuvent être fournis par le chargeur bidirectionnel (12), et déterminer la tension maximale et le courant maximal qui peuvent être fournis par le chargeur bidirectionnel (12) en tant que tension et courant respectivement pendant la décharge.

8. Dispositif selon la revendication 7, comprenant en outre:
une unité de la communication (804) configurée pour communiquer avec la charge (2) afin de collecter des informations sur une quantité d'électricité attendue de la charge; et déterminer la capacité restante de la batterie du chargeur bidirectionnel (12) après la fourniture d'une quantité d'électricité correspondante sur la base des informations sur la capacité de la batterie et des informations sur la quantité d'électricité attendue de la charge (2); et
l'unité de commande (803) étant en outre spécialement configurée pour commander le chargeur bidirectionnel (12) de manière à décharger du courant vers la charge (2) après avoir déterminé que la capacité restante de la batterie est supérieure à une valeur prédéfinie.

9. Dispositif électronique (900) comprenant: au moins un processeur (902) et une mémoire (903) qui lui est associée, dans lequel
la mémoire (903) stocke une instruction pouvant être exécutée par ledit au moins un processeur (902) et, lorsqu'elle est exécutée par ledit au moins un processeur (902), l'instruction permet audit au moins un processeur (902) d'exécuter les étapes du procédé selon l'une quelconque des revendications 1 à 6.

10. Support de stockage, dans lequel, lorsqu'une commande dans le support de stockage est exécutée par un processeur (902) d'un dispositif électronique (900), l'appareil électronique (900) peut exécuter les étapes du procédé selon l'une des revendications 1 à 6.
